# EUROPÄISCHE PATENTSCHRIFT

(11) **EP 0 733 454 B1**
(45) Veröffentlichungstag und Bekanntmachung des Hinweises auf die Patenterteilung: **09.12.1998**
(21) Anmeldenummer: 96104604.2
(22) Anmeldetag: 22.03.1996
(51) Int. Cl.: B29C 33/30, B29C 73/30

(54) **Verfahren zum Vulkanisieren von Reparaturstellen von Luftreifen und Vorrichtung zur Durchführung desselben**
Method for vulcanizing repairs on pneumatic tyres and apparatus for performing same
Procédé pour la vulcanisation des parties réparées des pneumatiques et dispositif pour sa mise en oeuvre

(30) Priorität: 22.03.1995 DE 29504874 U
(43) Veröffentlichungstag der Anmeldung: 25.09.1996
(73) Patentinhaber: STAHLGRUBER OTTO GRUBER GMBH & CO., 81675 München (DE)
(72) Erfinder: Scheurer, Karl-Heinz, D-81737 München (DE)
(74) Vertreter: Beetz & Partner Patentanwälte

(56) Entgegenhaltungen:
- EP-A- 0 511 803
- WO-A-86/02877
- DE-A- 1 729 721
- DE-U- 9 404 045
- FR-A- 1 039 780
- US-A- 3 596 869

## Beschreibung

Die Erfindung betrifft eine Vulkanisiervorrichtung und ein -verfahren zur Reparatur von Luftreifen der im Oberbegriff der Patentansprüche 1 bzw. 12 angegebenen Gattungen.

Bei der Vulkanisation von Gummiformkörpern, beispielsweise bei der Reparatur von Luftreifen, ist es für einen optimalen Ablauf des Vulkanisiervorganges von wesentlicher Bedeutung, daß der Vulkanisierdruck über die gesamte Fläche der Reparaturstelle gleichmäßig verteilt zur Einwirkung gebracht wird. Bei ebenen flachen oder hinsichtlich ihrer Form genau definierten Formkörpern ergeben sich keinerlei Probleme, den Andruck in gleichmäßiger Verteilung auf die zu vulkanisierende Fläche aufzubringen. Wenn die zu vulkanisierenden Formkörper jedoch eine unregelmäßige Gestalt haben, wie dies insbesondere bei der Reparatur von Luftreifen im Bereich der Seitenwände und/oder der Reifenschultern der Fall ist, läßt sich eine gleichmäßige flächige Druckverteilung nicht oder nur mit einem bei der Reifenreparatur inakzeptablen Aufwand erzielen, beispielsweise durch Verwendung von Sandkissen oder durch den Einsatz von Auflagern, die aus mehreren der jeweiligen Reifenform angepaßten Einzelteilen zusammengesetzt werden.

Aus der DE-A-3 538 581 ist eine Metallform zur Reifenvulkanisation bekannt, die eine Schablone aus einer Vielzahl von ringförmigen Blechlamellen aufweist. Die ringförmigen Blechlamellen werden in Ausnehmungen der massiven Metallform in einer bestimmten Folge übereinandergestapelt, wodurch sich die Innenfläche der Ringe zu der Laufstreifenfläche eines Luftreifens ergänzen.

Ferner ist aus der DE-PS 205 362 eine Vorrichtung zum Vulkanisieren von Luftreifen bekannt, bei der eine druckfeste und verformbare Lage aus Drahtspiralen und Verbindungsdrähten zwischen der toroidalen Innenwandung einer Preßform und der Oberfläche des Reifens angeordnet wird.

Aus dem DE-U-94 04 045 ist eine gattungsgemäße Vulkanisiervorrichtung und Verfahren, gemäß das einleitende Teil der Ansprüchen 1 und 12 zur Reparatur von Luftreifen bekannt, die ein stationäres oder mobiles Gestell mit einem angebauten Ständer und einem tischartigen Support aufweist, auf dem eine untere Heizplatte und ein Auflager für einen zu reparierenden Luftreifen montiert sind. Zur Anpassung an die Außenkontur des Luftreifens ist das Auflager mehrteilig ausgebildet, um eine großflächige Abstützung der Reparaturstelle des Luftreifens zu erreichen. Am unteren Ende eines am Gestell bewegbar montierten Schwenkarms ist ein Preßkopf aus einem gummielastischen Material lösbar befestigt, der unter Zwischenlage eines flachen Druckluftkissens und eines Heizkissens gegen die Innenwand des Luftreifens im Bereich der Reparaturstelle drückt und den für den Vulkanisationsvorgang erforderlichen Preßdruck erzeugt. Trotz der mehrteiligen Ausbildung des Auflagers läßt sich jedoch eine durchgehend großflächige Anlage insbesondere kritischer Reifenbereiche nicht erzielen.

Aufgabe der Erfindung ist es, bei der Vulkanisation von Reparaturstellen eines Luftreifens auf technisch einfache Weise eine gleichmäßige Verteilung des Vulkanisationsdruckes und der Vulkanisationswärme auch bei unregelmäßigen Konturen des Luftreifens zu gewährleisten.

Diese Aufgabe wird erfindungsgemäß durch die im jeweils kennzeichnenden Teil der Patentansprüche 1 bzw. 12 angegebenen Merkmale und Maßnahmen gelöst.

Zweckmäßige Ausgestaltungen der Erfindung sind in den Unteransprüchen angegeben.

Eine besonders feste Arretierung der vorzugsweise als Sechskant-Stäbe ausgebildeten Übertragungselemente in ihrer Anlagestellung wird durch ihre flächige gegenseitige Druckanlage unter der Einwirkung der seitlichen Klemmkräfte erreicht. Zweckmäßig sind eine Vielzahl von stabförmigen Übertragungselementen in einem die Halterung bildenden Rahmen einzeln axial verschiebbar angeordnet, welcher die Übertragungselemente lose umschließt und welcher mindestens ein durch die seitliche Klemmkraft querverschiebbares Druckstück aufweist. Zur Erzeugung dieser seitlichen Klemmkräfte können Handhebel mit Getriebeelementen oder auch Druckmittelzylinder verwendet werden, die über das querbewegliche Druckstück auf die in ihrer Anlageposition befindlichen Übertragungsstangen einwirken.

Formungssysteme, die aus einer Vielzahl von achsparallel dicht nebeneinander in einer rahmenförmigen Halterung angeordneten Übertragungsstäben bestehen, sind z.B. aus der US-A-3 596 869, der EP-A-511 803 und der WO 86/02877 bekannt. Allen bekannten Systemen ist gemeinsam, daß durch eine Verschiebung einzelner Übertragungsstangen eine von den Stangenenden gebildete dreidimensionale Oberflächenkontur gebildet wird, wobei nach diesem Formungsvorgang die Übertragungsstangen durch seitliche Klemmkräfte arretiert werden.

Im folgenden werden Ausführungsbeispiele der Erfindung anhand der Zeichnung im einzelnen beschrieben. Es zeigen:
- Fig. 1: ein Auflager mit einem zu reparierenden Teil eines Luftreifens und einem Druckpolster in schematischem Längsschnitt;
- Fig. 2: schematisch eine Draufsicht auf das Auflager ohne die obere Deckmembran;
- Fig. 3: eine andere Ausführung des erfindungsgemäßen Auflagers in schematischem Längsschnitt;
- Fig. 4: eine Vulkanisiervorrichtung in schematischer Seitenansicht;
- Fig. 5a,b: schematisch eine andere Vulkanisiervorrichtung im Einstell- und im Vulkanisierzustand.

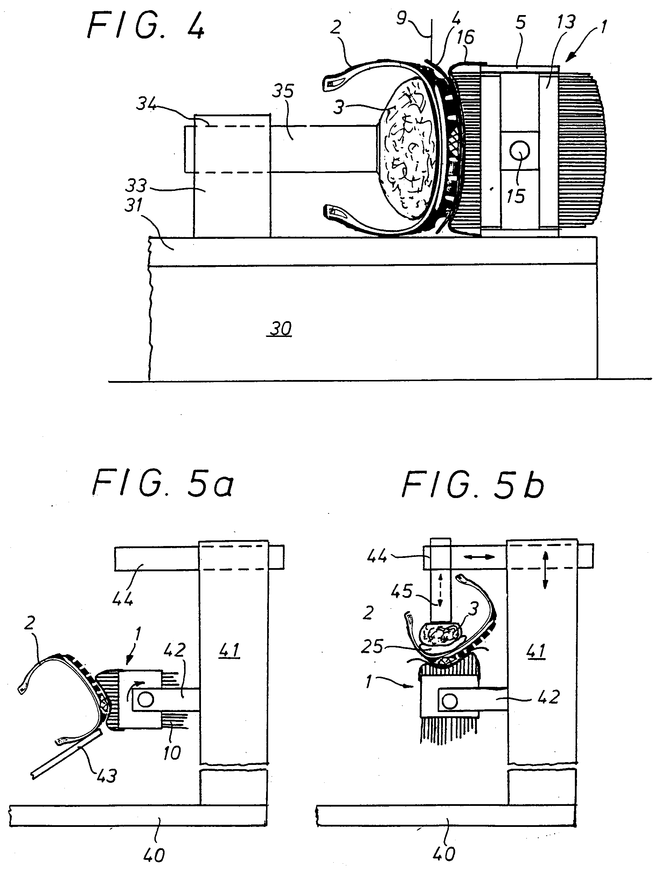

Das dargestellte Auflager 1 ist bei dem dargestellten Ausführungsbeispiel Teil einer Vulkanisiervorrichtung z.B. nach Fig. 4 oder 5 für einen Luftreifen 2, die ein Druckkissen 3 und zwei elektrisch beheizbare Heizmatten 4a, 4b enthält, die über elektrische Leitungen 9a, 9b von einer - nicht dargestellten - Steuereinheit mit Heizstrom versorgt werden.

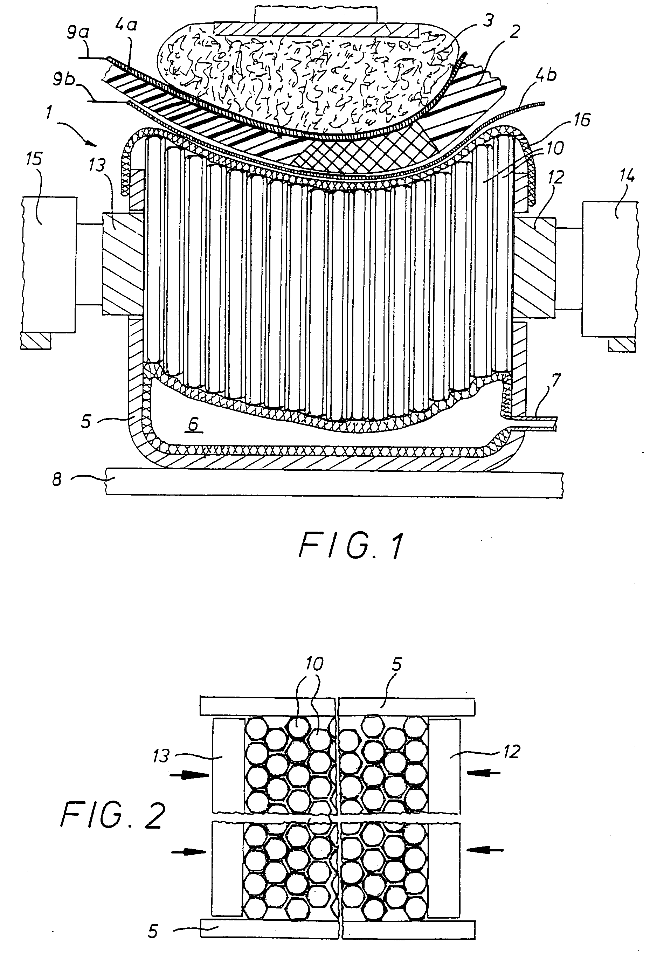

Das Auflager 1 nach Fig. 1 enthält ein oben offenes Gehäuse 5, in dessen Unterteil eine geschlossene Membran 6 angeordnet ist, die über einen Anschluß 7 mit einem Druckmittel gefüllt werden kann. Das auf einer druckfesten Basis 8 aufliegende Gehäuse 5 umschließt eine Vielzahl von parallelen stangenförmigen Übertragungselementen 10, die bei diesem Ausführungsbeispiel einen in Fig. 2 dargestellten Sechskantquerschnitt und abgekantete Enden haben. In seitlichen Ausnehmungen 11 des Gehäuses 5 sind zwei Querleisten 12, 13 angeordnet, die mittels Druckmittelzylindern 14, 15 in Richtung der in Fig. 2 dargestellten Pfeile verschoben werden können und dabei einen seitlichen Andruck auf die Übertragungsstäbe 10 ausüben. Die oberen Enden der Übertragungsstäbe 10 werden durch eine flexible Membran, z.B. durch ein druckfestes Gewebe 16, abgedeckt, das mit nur einem Seitenrand an der zugehörigen Seitenwand des Gehäuses 5 befestigt sein kann und nach Zurückschlagen eine Inspektion der verschobenen Stabenden 10 ermöglicht.

Das in den Fig. 1 und 2 dargestellte Auflager wirkt wie folgt. In einer Ausgangsstellung befinden sich alle Stäbe 10 in der gleichen unteren Stellung. Nach Auflage und entsprechender Positionierung des Luftreifens 2 unter vorheriger Zwischenlage der Heizmatten 4a auf dem dann etwa horizontal verlaufenden Gewebe 16 wird die kissenförmige Membran 6 über den Anschluß 7 mit einem Druckmittel beaufschlagt, das eine Vertikalverschiebung nach oben derjenigen Übertragungsstäbe 10 bewirkt, die sich mit ihrem oberen Ende noch nicht an der Reifenwandung abstützen. Durch eine vermehrte Druckmittelzufuhr in das Druckkissen 6 kann erreicht werden, daß alle Stäbe 10 um einen gewissen Betrag angehoben werden, um sicherzustellen, daß alle Stäbe mit ihrem oberen Ende über das Gewebe 16 und die Heizmatte 4 an der Reifenwandung anliegen. Wenn dieser in Fig. 1 dargestellte Zustand vorliegt, werden die beiden Druckmittelzylinder 14 und 15 aktiviert, die über die Querleisten 12, 13 die Stäbe so fest gegeneinanderdrücken, daß axiale Relativverschiebungen von Einzelstäben auch unter axialer Druckbelastung sicher vermieden werden. Aufgrund der sechseckigen Querschnittsform der einzelnen Stäbe 10 erfolgt eine gleichmäßige und großflächige Verteilung der von den Querleisten 12, 13 ausgeübten Seitenkräfte auf alle Übertragungsstäbe 10, die aufgrund einer gewissen Oberflächenrauhigkeit mit hohem Reibungsschluß fest gegeneinandergedrückt werden. Wie in Fig. 1 gezeigt, ergibt sich somit eine der Flächenkontur des Reifens 2 entsprechende dreidimensional gewölbte Form des Auflagers 1, wobei ein direkter Kontakt zwischen den Oberenden der Übertragungsstäbe 10 und der Heizmatte 4 bzw. der Reifenwand 2 durch das druckfeste und langlebige Gewebe 6 vermieden wird.

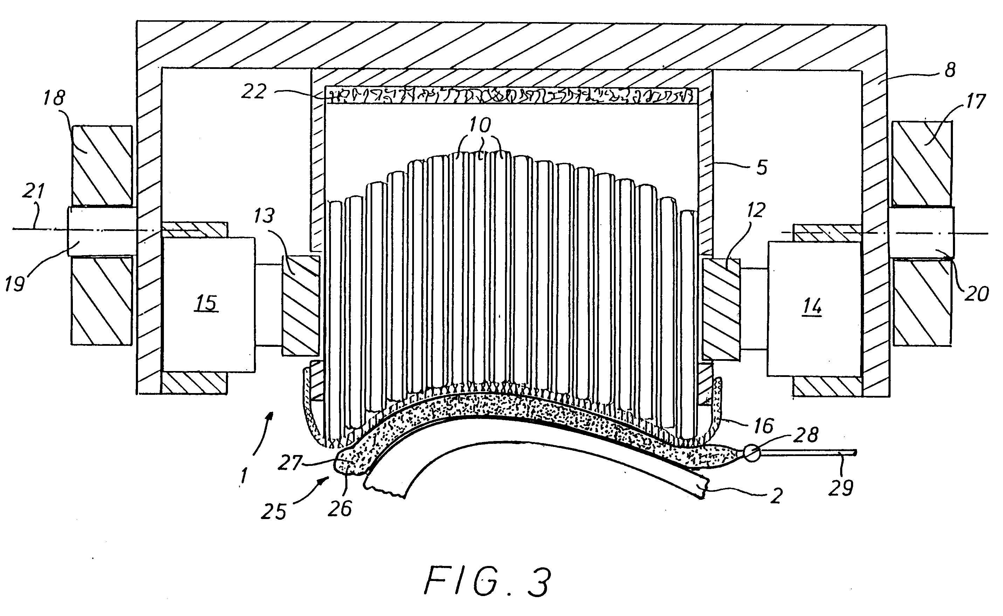

Die Ausführung nach Fig. 3 entspricht in ihrem wesentlichen Aufbau der Ausführung nach Fig. 1, so daß gleiche Bezugszeichen für gleiche Bauteile verwendet werden. Bei dieser Ausführung wird jedoch kein Druckmittelkissen 6 zur Erzeugung der axialen Verschiebekräfte der Übertragungsstangen 10 verwendet. Statt dessen erfolgt die Verschiebung dieser Übertragungsstangen 10 durch Schwerkraft, wobei in diesem Fall der Luftreifen 2 zur Positionierung der Übertragungsstangen 10 in ihrer Anlageposition unter der Gewebemembran 16 angeordnet ist. Die Verschiebung der Übertragungsstangen 10 kann auch auf andere Weise, beispielsweise von Hand bei waagrecht ausgerichtetem Rahmen 8, erfolgen, wie dies in Fig. 4 und 5 gezeigt ist.

Die bei dem Ausführungsbeispiel nach Fig. 3 rahmenförmige Basis 8 dient gleichzeitig zur Halterung der beiden Druckmittelzylinder 14, 15 und ist in seitlichen Querstreben 17, 18 über Lagerzapfen 19, 20 um die Horizontalachse 21 verschwenkbar gelagert sowie in der dargestellten oberen Stellung und in einer um 180° verdrehten unteren Stellung durch nicht dargestellte Mittel arretierbar.

Durch eine Verdrehung der Basis um die Achse 21 fallen die Übertragungsstangen 10 bei gelösten Querleisten 12, 13 bis auf den Boden des Gehäuses 5, der mit einem Dämpfungsmaterial 22 ausgekleidet ist. In dieser Stellung werden die Druckmittelzylinder 14, 15 aktiviert, so daß die Übertragungsstangen 10 von den Querleisten 12, 13 in der unteren Ausgangslage gehalten werden.

Nach der Positonierung des Luftreifens 2 und einer erneuten Verdrehung des Auflagers 1 in die in Fig. 3 dargestellte Lage werden die Querleisten 12, 13 gelöst, wodurch die vorzugsweise aus einem Leichtmetall bestehenden Stäbe 10 entweder aufgrund ihres Eigengewichts quasi als Block nach unten fallen oder in waagrechter Lage insgesamt oder gruppenweise von Hand verschoben werden, bis ihre Enden sich über die Gewebemembran 16 auf der Reifenseitenwand abstützen. Eine Ausrichtung der einzelnen Stäbe 10 mit den entsprechenden individuellen Relativbewegungen erfolgt am Ende des mit relativ großer Wucht ablaufenden Fallvorgangs, durch den gewährleistet wird, daß die unteren Stabenden in der dargestellten Weise der dreidimensional gewölbten Kontur der Reifenseitenwand folgen. Dieser Zustand ist in Fig. 3 dargestellt. Nach dieser Ausrichtung der Stäbe 10 werden die Druckzylinder 14, 15 erneut aktiviert und die Stäbe 10 mit auch hier Sechskantquerschnitt werden fest zusammengedrückt und bilden dadurch einen starren und druckfesten Block.

In Fig. 3 ist noch ein weiteres Auflager dargestellt, das hier ein Zwischenlager 25 bildet, z.B. als das in den Fig. 1, 4 und 5b dargestellte Druckkissen 3. Dieses Zwischenlager 25 besteht aus einer flexiblen luftdicht geschlossenen Hülle 26 aus einem druck- und reißfesten Material und hat hier die Form eines flachen Kissens. Die Hülle 26 ist mit einem feinkörnigen Granulat 27 aus z.B. besonders geformten Leichtmetallpartikeln gefüllt und kann über ein Sperrventil 28 und eine Anschlußleitung 29 an einen - nicht dargestellten - Vakuumerzeuger angeschlossen werden. In seinem Normalzustand ist das Auflagekissen 25 leicht verformbar, so daß seine oberen und unteren Wandungen durch einen recht geringen Druck großflächig und eng dem Verlauf auch unregelmäßig konturierten Flächen folgen können, wie dies in Fig. 3 gezeigt ist. Durch Evakuieren der eingeschlossenen Luft werden die Granulatpartikel aufgrund des auf die Hülle 26 allseitig einwirkenden Atmosphärendrucks innig zusammengedrückt und in gegenseitigen Eingriff gebracht, so daß das zuvor verformte Auflagerkissen 25 diese Form beibehält und auch erheblichen Druckkräften ohne Formänderung widersteht. Nach Öffnen des Sperrventils 29 wird durch den Druckausgleich die Bindung zwischen den Partikeln aufgehoben und der ursprüngliche schüttfähige Zustand des Granulats 27 wieder hergestellt, so daß eine erneute Verformung des Auflagerkissens 25 erfolgen kann.

In Fig. 4 ist eine konstruktiv einfache Vulkanisiervorrichtung dargestellt, die ein hier als Tisch 30 ausgebildetes Gestell aufweist. Auf diesem Tisch 30 ist ein Auflager 1 mit seiner einen Seitenwand des Gehäuses 5 fest montiert, so daß seine Stäbe 10 von Hand z.B. mittels eines geeigneten Stößels horizontal verschoben werden können. Auf der horizontalen Tischplatte 31 wird ein Luftreifen 2 in der gezeigten Weise so aufgelegt, daß die vorbereitete, d.h. zuvor mit unvulkanisierter Gummimischung 32 versehene, Reparaturstelle sich in einem geeigneten Abstand vor den Vorderenden der - noch in ihrer hinteren Position liegenden - Stäbe 10 befindet. Danach werden die Stäbe 10 in Fig. 4 von Hand nach links verschoben, bis alle ihre abgekanteten Vorderenden an der Reifenwand anliegen. Daraufhin erfolgt die Fixierung der Stäbe 10 durch die Klemmwirkung der Klemmplatten 12, 13, die von den Druckmittelzylindern 14, 15 oder von anderen geeigneten Druckerzeugern, wie z.B. Schraubspindeln, querverschoben werden (vgl. Fig. 1 und 2). Nach dem Fixieren der Stäbe 10 wird der Luftreifen 2 geringfügig verschoben, so daß in den gebildeten Spalt die Gewebemembrane 16 und eine Heizmatte 4 eingelegt werden können.

Auf dem Tisch 30 ist ein Sockel 33 montiert, der in den Innenraum des aufliegenden Luftreifens 2 hineinragt und eine Aufnahme 34 zum Einführen und zur verstellbaren Halterung eines Querträgers 35 aufweist, an dessen freiem Ende ein Druckkissen 3 montiert ist. Durch ein Längsverstellen des Querträgers 34 wird der Luftreifen 2 mit der Reparaturstelle 32 im Laufstreifen mit dem für den Vulkanisationsvorgang erforderlichen Druck über die druckfeste Heizmatte 4 und die Gewebemembrane 16 gegen die Vorderflächen der fixierten Stäbe 10 gedrückt. Die gleichzeitig mit Heizstrom versorgte Heizmatte 4 erzeugt die für den Vulkanisationsvorgang benötigte Wärme.

Die in Fig. 5a, 5b dargestellte Vulkanisiervorrichtung besitzt einen auf einer Basis 40 fest montierten Ständer 41, an dem zwei parallele und horizontale Tragbalken 42 ggf. in der Höhe verstellbar montiert sind. Zwischen den freien Enden der beiden Tragarme 42 ist ein Auflager 1 verdrehbar gelagert, das in der in den Fig. 1 bis 3 dargestellten Weise ausgebildet ist und in der in Fig. 5a gezeigten horizontalen Lage sowie in der vertikalen Stellung nach Fig. 5b sowie ggf. auch in Zwischenstellungen fest arretiert werden kann. Zur Einstellung der Stäbe 10 wird ein ggf. auf einem verstellbaren Traggestell 43 aufliegender Reifen 2 an das Auflager 1 gebracht und dessen Stäbe 10 werden horizontal bis zur Anlage an der Reifenwandung - hier im Schulterbereich - längsverschoben und festgeklemmt. Nach Wegnahme des Reifens 2 wird das Auflager 1 in die in Fig. 5b dargestellte Lage verdreht und arretiert. In einen im oberen Teil des Ständers 41 längs- und höhenverstellbar montierten Querbalken 44 wird eine vertikale Strebe 45 und an dessen unterem Ende ein Druckkissen 3 montiert. Zwischen der Innenwand des Reifens 2 und dem Druckkissen 3 kann ein kissenförmiges Zwischenauflager 25 der in Fig. 3 dargestellten Art sowie eine innere Heizmatte 4b eingelegt werden. Durch vertikales Verstellen der Strebe 45 und/oder des Querbalkens 44 wird der Vulkanisationsdruck erzeugt.

Die Erfindung ist nicht auf die vorstehend beschriebenen Ausführungsbeispiele beschränkt. So können statt der dargestellten Übertragungsstangen 10 auch andere druckfeste Übertragungselemente verwendet werden, beispielsweise Rundprofile oder auch plattenförmige Übertragungselemente, die jedoch nur eine zweidimensionale Formanpassung ermöglichen. Darüber hinaus kann auch die Axialverschiebung der Vielzahl von Übertragungselementen aus der Ausgangsposition in die Anlagestellung durch andere geeignete Maßnahmen und Mittel erfolgen. Schließlich können auch mehrere Auflager miteinander z.B. durch Gelenke verbunden werden, wodurch größere Flächen auch über den ganzen Umfang, z.B. eines Luftreifens, abgedeckt werden können.

## Patentansprüche

1. Vulkanisiervorrichtung zur Reparatur von Luftreifen, bestehend aus einem Gestell (30; 40, 41) zur Aufnahme und Halterung eines Luftreifens (2), einem am Gestell befestigten druckfesten Auflager (1) zur Abstützung der Außenwand des Luftreifens im Bereich der Reparaturstelle, einem einstellbaren Gegenhalter (3, 35; 45) mit einem gegen die Innenwand des Luftreifens im Bereich der Reparaturstelle andrückbaren Druckkissen zum Erzeugen des Vulkanisierdruckes und aus einer auf die Reparaturstelle auflegbaren Heizmatte (4a, 4b),
**dadurch gekennzeichnet,**
daß das Auflager (1) eine Vielzahl von formsteifen Übertragungselementen (10) aufweist, die dicht nebeneinander mit gegenseitigem Reibungskontakt ihrer Umfangsflächen in einer rahmenförmigen Halterung (5) angeordnet, bis zur Anlage jedes Übertragungselements (10) an dem Luftreifen (2) axial verschiebbar und in dieser Anlagestellung durch eine seitlich wirkende Klemmkraft unter gegenseitigem Reibungsschluß arretierbar sind.

2. Vulkanisiervorrichtung nach Anspruch 1, dadurch gekennzeichnet, daß die Übertragungselemente (10) des Auflagers (1) stabförmig ausgebildet sind und gleiche Sechskantquerschnitte aufweisen.

3. Vulkanisiervorrichtung nach Anspruch 1 oder 2, dadurch gekennzeichnet, daß die Übertragungselemente (10) gleiche Länge haben.

4. Vulkanisiervorrichtung nach einem der Ansprüche 1 bis 3, dadurch gekennzeichnet, daß die Halterung (5) in Form eines Rahmens ausgebildet ist, der die Übertragungselemente (10) umschließt und der mindestens ein querverschiebbares Druckstück (12, 13) zur Erzeugung der seitlichen Klemmkraft aufweist.

5. Vulkanisiervorrichtung nach Anspruch 4, dadurch gekennzeichnet, daß an den Stirnseiten der rahmenförmigen Halterung (5) Antriebsaggregate (14, 15) angeordnet sind, die mit den stirnseitig an der Halterung (5) vorgesehenen leistenförmigen Druckstücken (12, 13) kinematisch verbunden sind.

6. Vulkanisiervorrichtung nach Anspruch 1, dadurch gekennzeichnet, daß die Übertragungselemente des Auflagers als Platten mit längsprofilierter Oberkante ausgebildet und hochkant dicht nebeneinander in der Halterung angeordnet sind.

7. Vulkanisiervorrichtung nach einem der Ansprüche 1 bis 6, dadurch gekennzeichnet, daß die abgekanteten Auflageenden der Übertragungselemente (10) durch eine flexible zug- und druckfeste Membran (16) abgedeckt sind.

8. Vulkanisiervorrichtung nach einem der Ansprüche 1 bis 7, dadurch gekennzeichnet, daß die Übertragungselemente (10) bei gelöster Arretierung (12, 13) durch ein auf ihre inneren Enden einwirkendes Druckkissen (6) bis zur Anlage ihrer äußeren Auflageenden an dem Luftreifen (2) unter Zwischenschaltung der Membran (16) frei verschiebbar sind.

9. Vulkanisiervorrichtung nach einem der Ansprüche 1 bis 8, dadurch gekennzeichnet, daß das Auflager (1) aus einer Einstellposition in eine Vulkanisierposition bewegbar am Gestell (41, 42) angeordnet ist.

10. Vulkanisiervorrichtung nach Anspruch 9, dadurch gekennzeichnet, daß das verstellbare Auflager (1) an Querarmen (35, 42) des Gestells (41) montiert ist.

11. Vorrichtung nach einem der Ansprüche 1 bis 8, dadurch gekennzeichnet, daß das Auflager (1) mit einer Seitenwand auf dem tischartigen Gestell (30, 31) montiert ist und daß der Gegenhalter (35) an einem auf dem Tisch (30) befestigten Sockel (33) horizontal verstellbar angeordnet ist.

12. Verfahren zum Vulkanisieren von Reparaturstellen von Luftreifen, bei dem Luftreifen mit der vorbereiteten Reparaturstelle zwischen einem Auflager (1) und einem Gegenhalter (35) eingespannt und unter Druck und Wärmezufuhr vulkanisiert wird,
**dadurch gekennzeichnet,**
daß dem Auflager (1) eine der Flächenkontur des Luftreifens im Bereich der Reparaturstelle folgende Form gegeben wird und daß das Auflager in dieser erteilten Form vor der Druck- und Wärmezufuhr verfestigt wird.

13. Verfahren nach Anspruch 12, dadurch gekennzeichnet, daß zur Formgebung des Auflagers (1) seine Einzelelemente (10) bis zu ihrer Anlage an die Fläche der vorbereiteten Reparaturstelle des Luftreifens (2) axial verschoben werden und daß zur Verfestigung des Auflagers in der erteilten Form seine Einzelelemente durch Querkräfte gegeneinander verspannt werden.

## Claims

1. A vulcanising device for repairing pneumatic tyres, consisting of a stand (30; 40; 41) for accepting and holding a pneumatic tyre (2), a pressure-resistant support (1) fastened to the stand to support the outer wall of the pneumatic tyre in the region of the repair, an adjustable arm (3; 35; 45) with a pressure pad which can be pressed against the inner wall of the pneumatic tyre in the region of the repair in order to produce the vulcanising pressure and a heating blanket (4a, 4b) which can be laid over the repair,
characterised in that the support (1) has a number of dimensionally stable transmission elements (10) which are arranged in a frame-shaped holder (5), are held firmly against each other by mutual frictional contact between their outer surfaces, can be axially shifted until each transmission element (10) is in contact with the pneumatic tyre (2) and can be locked in this position under the effects of mutual friction by means of a laterally acting clamping force.

2. A vulcanising device according to Claim 1, characterised in that the transmission elements (10) in the support (1) are designed as rod-shaped and have uniform hexagonal cross-sections.

3. A vulcanising device according to Claim 1 or 2, characterised in that the transmission elements (10) are all the same length.

4. A vulcanising device according to one of Claims 1 to 3, characterised in that the holder (5) is designed in the form of a frame which encloses the transmission elements (10) and has at least one laterally moveable thrust piece (12, 13) to produce the lateral clamping force.

5. A vulcanising device according to Claim 4, characterised in that drive units (14, 15) are arranged on the faces of the frame-shaped holder (5) which are mechanically linked to the block-shaped thrust pieces (12, 13) provided on the face of the holder (5).

6. A vulcanising device according to Claim 1, characterised in that the transmission elements in the support are designed as plates with upper edges which have a longitudinal profile and are arranged upright and close to each other in the holder.

7. A vulcanising device according to one of Claims 1 to 6, characterised in that the bevelled supporting ends of the transmission elements (10) are covered by a flexible tension- and compression-resistant membrane (16).

8. A vulcanising device according to one of Claims 1 to 7, characterised in that the transmission elements (10) can be moved freely when they are not locked in place (12, 13) until their outer supporting ends make contact with the pneumatic tyre (2), with the interposition of membrane (16), as a result of a pressure pad (6) acting on their inner ends.

9. A vulcanising device according to one of Claims 1 to 8, characterised in that the support (1) is arranged in such a way that it can be moved on the stand (41, 42) from an adjusting position to a vulcanising position.

10. A vulcanising device according to Claim 9, characterised in that the adjustable support (1) is mounted on the transverse arms (35, 42) of the stand (41).

11. A device according to one of Claims 1 to 8, characterised in that the support (1) is mounted with one side wall on the table type stand (30, 31) and in that the arm (35) is arranged to be horizontally adjustable on a base (33) fastened to the table (30).

12. A process for vulcanising repairs in pneumatic tyres, in which the pneumatic tyre with the prepared repair is clamped between a support (1) and an arm (35) and is vulcanised under pressure with the supply of heat,
characterised in that the support (1) is given a shape which follows the surface contour of the pneumatic tyre in the region of the repair and in that the support is fixed in this given shape before supplying pressure and heat.

13. A process according to Claim 12 characterised in that the individual elements (10) are axially shifted until they make contact with the surface of the prepared repair on the pneumatic tyre (2) in order to shape the support (1) and in that the individual elements are braced against each other with a transverse force in order to fix the support in the given shape.

## Revendications

1. Dispositif de vulcanisation pour la réparation de pneus, comportant un châssis (30; 40, 41) pour loger et fixer un pneu (2), un support (1) résistant à la pression et fixé sur le châssis pour le soutien de la paroi extérieure du pneu dans la zone du point de réparation, un contre-support (3, 35; 45) réglable par un coussin de pression pouvant être pressé contre la paroi intérieure du pneu dans la zone du point de réparation et destiné à produire la pression de vulcanisation et un mat chauffant (4a, 4b) pouvant être posé sur le point de réparation, caractérisé en ce que le support (1) présente plusieurs éléments de transmission (10) de forme rigide qui sont disposés dans une fixation (5) en forme de cadre, serrés les uns contre les autres avec un contact à frottement mutuel de leurs surfaces périphériques, sont déplaçables axialement jusqu'à l'appui de chaque élément de transmission (10) contre le pneu (2) et qui, dans cette position d'appui, peuvent être bloqués par une force de serrage agissant latéralement sous l'effet d'un frottement mutuel.

2. Dispositif de vulcanisation selon la revendication 1, caractérisé en ce que les éléments de transmission (10) du support (1) sont réalisés en forme de barre et présentent des sections transversales identiques à six pans.

3. Dispositif de vulcanisation selon la revendication 1 ou 2, caractérisé en ce que les éléments de transmission (10) ont la même longueur.

4. Dispositif de vulcanisation selon l'une quelconque des revendications 1 à 3, caractérisé en ce que la fixation (5) est réalisée sous forme d'un cadre qui entoure les éléments de transmission (10) et qui présente au moins un membre de pression (12, 13) déplaçable transversalement et destiné à produire la force de serrage latérale.

5. Dispositif de vulcanisation selon la revendication 4, caractérisé en ce que sur les côtés frontaux de la fixation (5) en forme de cadre, sont disposés des organes moteurs (14, 15) qui sont assemblés de manière cinématique avec les membres de pression (12, 13) en forme de barre et prévus du côté frontal de la fixation (5).

6. Dispositif de vulcanisation selon la revendication 1, caractérisé en ce que les éléments de transmission du support sont réalisés comme plaques présentant un bord supérieur profilé dans le sens longitudinal et sont disposés debout, serrés les uns contre les autres dans la fixation.

7. Dispositif de vulcanisation selon l'une quelconque des revendications 1 à 6, caractérisé en ce que les extrémités d'appui biseautées des éléments de transmission (10) sont recouvertes par une membrane (16) flexible résistante à la traction et à la pression.

8. Dispositif de vulcanisation selon l'une quelconque des revendications 1 à 7, caractérisé en ce que, lors du desserrage du blocage (12, 13) par un coussin de pression (6) agissant sur les extrémités intérieures des éléments de transmission, les éléments de transmission (10) sont déplaçables librement jusqu'à l'appui de leurs extrémités d'appui extérieures contre le pneu (2) en intercalant la membrane (16).

9. Dispositif de vulcanisation selon l'une quelconque des revendications 1 à 8, caractérisé en ce que le support (1) est disposé sur le châssis (41, 42) de manière à pouvoir se déplacer d'une position de réglage à une position de vulcanisation.

10. Dispositif de vulcanisation selon la revendication 9, caractérisé en ce que le support (1) déplaçable est monté sur des bras transversaux (35, 42) du châssis (41).

11. Dispositif de vulcanisation selon l'une quelconque des revendications 1 à 8, caractérisé en ce que le support (1) est monté avec une paroi latérale sur le châssis (30, 31) analogue à une table et en ce que le contre-support (35) est disposé de façon à se déplacer horizontalement sur un socle (33) fixé sur la table (30).

12. Procédé pour la vulcanisation de points de réparation de pneus, dans lequel un pneu avec le point de réparation préparé est serré entre un support (1) et un contre-support (35) et vulcanisé sous l'effet de la pression et de l'apport de chaleur, caractérisé en ce qu'une forme suivant le contour de la surface du pneu dans la zone du point de réparation est donnée au support (1) et en ce que le support est fixé dans cette forme donnée avant l'apport de pression et de chaleur.

13. Procédé selon la revendication 12, caractérisé en ce que pour le façonnage du support (1), ses éléments individuels (10) sont déplacés axialement jusqu'à être disposés contre la surface du point de réparation préparé et en ce que, pour la stabilisation du support dans la forme donnée, ses éléments individuels sont serrés les uns contre les autres par des forces transversales.
